# EUROPÄISCHE PATENTSCHRIFT

(11) **EP 1 785 965 B1**
(45) Veröffentlichungstag und Bekanntmachung des Hinweises auf die Patenterteilung: **25.05.2016**
(21) Anmeldenummer: 06123718.6
(22) Anmeldetag: 09.11.2006
(51) Int. Cl.: G08C 23/04

(54) **Verfahren und Einrichtung zur bidirektionalen IR-Datenübertragung zwischen einem medizinischen Behandlungstisch und einem Bediengerät**
Method and apparatus for bidirectional IR data transmission between a medical treatment table and a remote control device
Méthode et dispositif pour la transmission bidirectionnelle de données par infrarouge entre une table de traitement et une télécommande

(30) Priorität: 14.11.2005 DE 102005054230
(43) Veröffentlichungstag der Anmeldung: 16.05.2007
(73) Patentinhaber: MAQUET GmbH, 76437 Rastatt (DE)
(72) Erfinder: Ruch, Jürgen, 77652 Offenburg (DE); Biehl, Thomas, 76437 Rastatt (DE)
(74) Vertreter: Zacco GmbH

(56) Entgegenhaltungen:
- EP-A1- 1 312 332
- WO-A1-01/93223
- US-A- 4 231 019
- US-A- 5 663 716

## Beschreibung

Die vorliegende Erfindung betrifft ein Verfahren zur bidirektionalen IR-Datenübertragung zwischen einem medizinischen Behandlungstisch, insbesondere einem Operationstisch, und einem Bediengerät, die jeweils einen IR-Sender und einen IR-Empfänger umfassen. Der Operationstisch und das Bediengerät werden im Folgenden auch zusammenfassend als "Teilnehmer" der IR-Datenübertragung bezeichnet. Unter einem medizinischen Behandlungstisch wird im Rahmen dieser Anmeldung jede Art von Patientenlagerfläche verstanden, auf der ein Patient zur Untersuchung oder Behandlung gelagert werden kann, d.h. beispielsweise auch eine Liege oder eine Umbetteinrichtung.

Der typische Fall einer IR-Datenübertragung bei einem Operationstisch erfolgt einseitig, nämlich von einem Bediengerät auf den Operationstisch. Dabei werden Verstellbefehle zum Verstellen oder Verfahren des Operationstisches kabellos als IR-Signale auf den Operationstisch übertragen.

Es ist ferner bekannt, Daten über IR-Signale zwischen einem Operationstisch und einem so genannten Wandtableau zu übertragen, welches ein Spezialfall eines Bediengerätes ist. Das Wandtableau hat Tasten zum Eingeben von Verstellbefehlen, die als IR-Signale auf den Operationstisch übertragen werden. Der Operationstisch kann seinerseits über einen IR-Sender Statusinformationen als IR-Signale an das Wandtableau senden, welches die Information dann auf einem LC-Display darstellt.

Bei diesem bekannten Verfahren werden demnach Daten bidirektional als IR-Signale zwischen dem Operationstisch und dem Bediengerät übertragen. Aller-dings können dabei die Signale in die gegenseitigen Richtungen nur nacheinander übertragen werden. Wenn beispielsweise eine Taste des Wandtableaus gedrückt wird, um den Operationstisch in eine bestimmte Position zu verfahren, kann eine Rückmeldung vom Operationstisch erst dann gesendet werden, wenn die Taste los gelassen wird. Das bedeutet, dass während einer Bedienung des Wandtableaus keine Rückmeldung von dem Operationstisch zurückgesendet werden kann, beispielsweise ob eine bestimmte angestrebte Stellung bereits erreicht ist oder nicht. Eine kontinuierliche Benutzerführung, bei der auf dem Bediengerät der aktuelle Zustand des Operationstisches angezeigt wird, ist daher nicht möglich.

Aus dem Dokument EP 1 312 332 A2 ist ein Verfahren zur IR-Datenübertragung zwischen einem medizinischen Behandlungstisch und einem Bediengerät bekannt.

Aus dem Dokument WO 01/93223 A1 ist ein Verfahren zum Vermeiden von Kollisionen zwischen Fernbedienungssignalen bekannt, bei dem die einzelnen Teilnehmer vor dem Senden das Übertragungsmedium prüfen und, wenn sie dabei Signale detektieren, ihre eigene Übertragung entsprechend verzögern.

Der Erfindung liegt die Aufgabe zugrunde, ein Verfahren und eine Vorrichtung der eingangs genannten Art anzugeben, die eine kontinuierliche Benutzerführung ermöglichen.

Diese Aufgabe wird bei dem Verfahren gemäss Anspruchs 1 gelöst.

Diese Aufgabe wird ferner durch eine Einrichtung nach Anspruch 14 gelöst. Vorteilhafte Weiterbildungen sind in den abhängigen Ansprüchen angegeben.

Nach dem erfindungsgemäßen Verfahren können die beiden Teilnehmer quasi gleichzeitig senden, oder es können mehrere Geräte gleichzeitig bedient werden, ohne dass die Gefahr einer Datenkollision besteht, da der eine Teilnehmer seine Datenblöcke jeweils in der Pause zwischen zwei Datenblöcken des anderen Teilnehmers übertragen kann. Wenn also der Benutzer des Bediengerätes beispielsweise eine Taste gedrückt hält, um einen Abschnitt des Operationstisches zu verstellen, wird dieser Befehl in Form von Datenblöcken übertragen, zwischen denen jeweils eine Pause besteht. In diesen Pausen kann dann der Operationstisch seinerseits Statusinformationen zurücksenden, beispielsweise in welcher Stellung sich der verstellte Abschnitt gegenwärtig befindet. Diese Statusinformationen helfen dann dem Benutzer, eine bestimmte Stellung, beispielsweise eine 45°-Stellung eines Lagerflächensegmentes zu finden. Durch diese quasi gleichzeitige Kommunikation zwischen dem Operationstisch und dem Bediengerät wird somit eine kontinuierliche Benutzerführung ermöglicht. Ferner wird die Störsicherheit der Datenübertragung zwischen den Teilnehmern erhöht.

Vorzugsweise wird vor dem Senden eines Datenblocks geprüft, ob gegenwärtig IR-Signale vorliegen, und für den Fall, dass IR-Signale vorliegen, mit dem Senden des Datenblocks gewartet, bis eine vorbestimmte Wartezeit seit dem Verschwinden des IR-Signals verstrichen ist. Auf diese Weise synchronisieren sich die beiden Teilnehmer der IR-Datenübertragung derart, so dass sie jeweils in der Pause zwischen den Datenblöcken des jeweils anderen Teilnehmers senden. Diese Weiterbildung hat aber noch den weiteren Vorteil, dass eine Kollision der gesendeten Daten mit Störsignalen von Fremdsendern, die ebenfalls IR-Signale aussenden, vermieden wird. Denn es wird nach dieser Weiterbildung erst und nur dann gesendet, wenn auch ein derartiges Störsignal verschwunden ist. Mögliche Quellen für Störsignale, die in Operationsräumen auftreten können, sind beispielsweise elektronische Vorschaltgeräte für Leuchtstofflampen oder andere medizinische Geräte, beispielsweise chirurgische Navigationssysteme.

Vorzugsweise ist die vorbestimmte Wartezeit des Bediengerätes von der vorbestimmten Wartezeit des Operationstisches verschieden, insbesondere kürzer. Dadurch wird erreicht, dass nicht beide Teilnehmer nach Verschwinden eines IR-Signals gleichzeitig versuchen zu senden und sich dabei stören. Aufgrund der kürzeren vorbestimmten Wartezeit wird das Bediengerät dabei bevorzugt, weil die Bedienung eine höhere Priorität hat als die Statusrückmeldung durch den Operationstisch.

In einer vorteilhaften Weiterbildung sind mehrere Operationstische und zugehörige Bediengeräte mit zumindest teilweise überlappenden IR-Signal-Empfangsbereichen vorgesehen, und wird einem jeden der Teilnehmer eine andere Wartezeit zugeordnet. Wenn mehrere Operationstische in einem Operationsraum stehen, oder wenn benachbarte Operationsräume durch Fenster verbunden sind, kann es sein, dass sich die IR-Signal-Empfangsbereiche überlappen, so dass beispielsweise ein Operationstisch Signale von einem anderen Operationstisch oder dem Bediengerät eines anderen Operationstisches empfängt. Zwar erkennt der Operationstisch anhand eines unten näher beschriebenen Identifikationscodes, ob das Signal für ihn bestimmt ist oder nicht, jedoch kann das Signal eines anderen Operationstisches oder dessen Bediengerätes den gleichzeitigen Empfang des Signals des eigenen Bediengerätes stören. Um diese Probleme zu vermeiden, wird jedem der Teilnehmer eine andere Wartezeit zugeordnet, so dass sich sämtliche Teilnehmer, deren IR-Signal-Empfangsbereiche überlappen könnten, miteinander so synchronisiert werden, dass sie einander nicht stören können, wie unten anhand eines Ausführungsbeispiels näher erläutert wird.

Alternativ dazu können unterschiedliche Wartezeiten vorgesehen sein und die betreffende Wartezeit kann zufällig aus den vorgesehenen Wartezeiten ausgewählt werden. Bei dieser zufälligen Auswahl der Wartezeiten ist es unwahrscheinlich, dass bei zwei verschiedenen Operationstischen gleichzeitig gesendet wird. Somit bietet die zufällige Auswahl von Wartezeiten eine sehr einfache Alternative die Kollision von Signalen zu vermeiden, ohne dass die verschiedenen Operationstische bezüglich der Wartezeiten extra aufeinander abgestimmt werden müssen.

Vorzugsweise beträgt die Trägerfrequenz der IR-Signale mehr als 120 KHz, besonders vorzugsweise 350 bis 550 KHz. Damit liegt die Trägerfrequenz weit über den bisher verwendeten Trägerfrequenzen von 40 KHz oder weniger. Diese erhöhte Trägerfrequenz hat zwei große Vorteile. Zum einen können die Datenblöcke bei gleicher enthaltener Datenmenge bei einer höheren Trägerfrequenz kürzer gemacht werden. Dadurch sinkt die Wahrscheinlichkeit, dass in den Übertragungszeitraum eines Datenblocks eine externe Störung fällt. Außerdem können die Daten einer größeren Anzahl von Teilnehmern ineinander verschachtelt werden, ohne dass die Datenübertragung bezogen auf jeden einzelnen Teilnehmer zu langsam würde.

Der andere Vorteil besteht darin, dass die für einen Operationsraum typischen Quellen für IR-Störfelder, insbesondere elektronische Vorschaltgeräte von Leuchtstofflampen oder Infrarotkameras von Navigationssystemen niedrigere Trägerfrequenzen aufweisen, die ebenfalls im Bereich von 40 KHz oder darunter liegen. Durch die Wahl einer dem gegenüber stark erhöhten Trägerfrequenz wird die Wechselwirkung mit den Störfeldern abgeschwächt, so dass der Einfluss der Störung erheblich vermindert werden kann.

Vorzugsweise enthält jeder Datenblock einen Identifikationscode, der einem Teilnehmer zugeordnet ist, so dass ein jeder Teilnehmer anhand des Identifikationscodes erkennen können, ob der Datenblock für ihn bestimmt ist.

Die Signallänge eines Datenblocks beträgt vorzugsweise 1 ms bis 50 ms, besonders vorzugsweise 2ms bis 10 ms. Diese Signallänge ist lang genug, um eine ausreichende Datenmenge zu übermitteln. Gleichzeitig ist sie kurz genug, um die Wahrscheinlichkeit von Störungen gering zu halten und um den Hin- und Hertransport von Daten so fein zu verzahnen, dass man für praktische Zwecke von einer "gleichzeitigen" Übertragung sprechen kann, die die oben beschriebene kontinuierliche Benutzerführung erst ermöglicht.

Vorzugsweise beträgt die Pause zwischen dem Senden zweier Datenblöcke durch einen Teilnehmer das 5- bis 50-fache, insbesondere das 10- bis 25-fache der Signallänge eines Datenblocks. Bei diesem Verhältnis ist es in dem oben beschriebenen Verfahren, bei dem unterschiedlichen Teilnehmern unterschiedliche Wartezeiten zugeordnet werden, leicht möglich, die Signalübertragung einer größeren Anzahl von Teilnehmern zu synchronisieren, wie unten anhand eines Ausführungsbeispieles näher erläutert wird.

Die von dem Bediengerät auf den Operationstisch zu übertragenden Daten können Verstellbefehle zum Verstellen der Lagerfläche des Operationstisches betreffen.

Die vom Operationstisch auf das Bediengerät übertragenen Daten können Statusanzeigen eines oder mehrerer der folgenden Zustände des Operationstisches betreffen: die aktuelle Stellung und Position der Lagerfläche, das Erreichen von gespeicherten Stellungen und Positionen der Lagerfläche, Fehlermeldungen, Informationen über nicht mögliche Funktionen, die Verbindung zum Stromnetz, den Ladezustand von Akkumulatoren und die Warnung vor einer Kollision des Operationstisches mit weiterem Zubehör.

Zum besseren Verständnis der vorliegenden Erfindung wird im Folgenden auf das in den Zeichnungen dargestellte bevorzugte Ausführungsbeispiel Bezug genommen, welches anhand spezifischer Terminologie beschrieben ist. Es sei jedoch darauf hingewiesen, dass der Schutzumfang der Erfindung dadurch nicht eingeschränkt werden soll, da derartige Veränderungen und weitere Modifizierungen an dem gezeigten Verfahren sowie derartige weitere Anwendungen der Erfindung, wie sie darin aufgezeigt sind, als übliches derzeitiges und künftiges Fachwissen eines zuständigen Fachmanns angesehen werden. Die Figuren zeigen ein Ausführungsbeispiel der Erfindung, nämlich:
- Fig. 1: vier Operationstische mit zugehörigen Bediengeräten,
- Fig. 2: eine schematische Darstellung des Aufbaus eines Bytes des IR-Datenformats,
- Fig. 3: eine schematische Darstellung des Aufbaus eines Datenblocks des IR-Datenformats und
- Fig. 4: ein Zeitdiagramm, in dem der zeitliche Ablauf des Sendens der Operationstische und Bediengeräte von Figur 1 schematisch dargestellt ist.

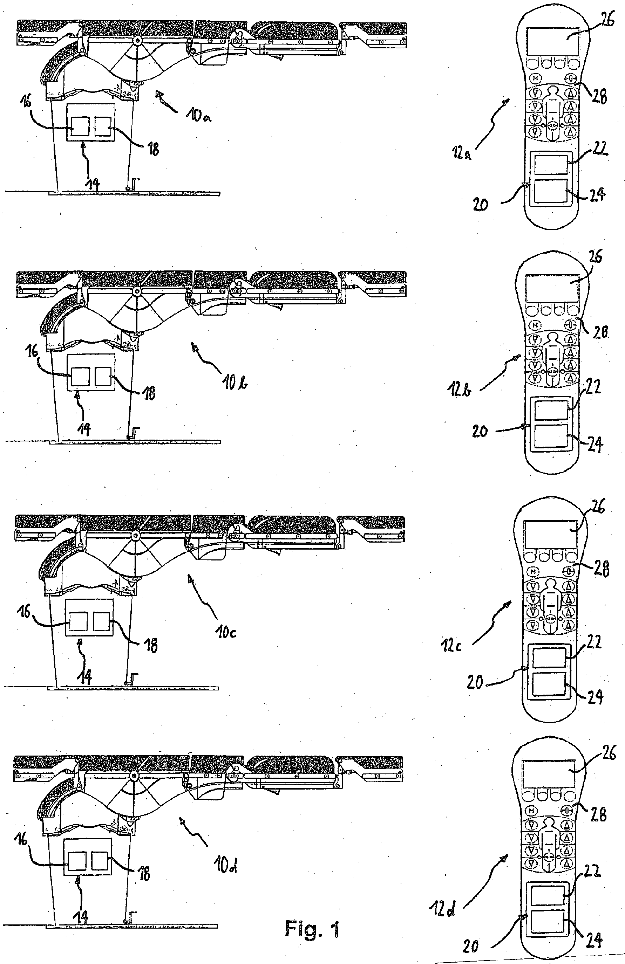

In Figur 1 sind vier Operationstische 10a bis 10d mit ihren zugehörigen Bediengeräten 12a bis 12b schematisch dargestellt. Jeder Operationstisch 10a bis 10b umfasst eine schematisch dargestellte IR-Datenübertragungseinheit 14, die einen IR-Sender 16 und einen IR-Empfänger 18 umfasst.

Ein jedes der Bediengeräte 12a bis 12d umfasst eine schematisch dargestellte IR-Datenübertragungseinheit 20 mit einem Sender 22 und einem Empfänger 24. Die Bediengeräte 12a bis 12d haben ferner ein LC-Display 26 und eine Bedienfläche 28, auf der Knöpfe oder Tasten zum Eingeben von Verstellbefehlen angeordnet sind.

Zwischen der Datenübertragungseinheit 14 des Operationstisches und der Datenübertragungseinheit 20 des Bediengerätes werden Daten in Form von IR-Signalen ausgetauscht. Daher werden beide im Folgenden auch verallgemeinert als "Teilnehmer" der IR-Datenübertragung bezeichnet. Der Operationstisch 10a und das zugehörige Bediengerät 12a haben einen gemeinsamen IR-Code, mit dem die Datenblöcke gekennzeichnet werden, die einer von ihnen an den anderen sendet. Anhand dieses IR-Codes erkennt der Teilnehmer die Daten, die für ihn bestimmt sind. Auch die übrigen Paare aus Operationstisch und Bediengerät 10b/12b, 10c/12c und 10d/12d haben einen jeweils einzigartigen IR-Code.

Die Operationstische 10a bis 10d befinden sich in einem gemeinsamen Operationsraum oder in getrennten Operationsräumen, die mit Fenstern verbunden sind, so dass Signale von einem Operationstisch oder dessen Bedienung auch von einem oder mehreren der anderen Operationstische und/oder deren Bediengeräte empfangen werden können. Mit anderen Worten überlappen die IR-Signal-Empfangsbereiche der Operationstische 10a bis 10d zumindest teilweise miteinander.

Im Folgenden werden die Grundzüge der bidirektionalen IR-Datenübertragung zwischen zwei Teilnehmern anhand des Operationstisches 10a und dem zugehörigen Bediengerät 12a erläutert. An dem Bediengerät 12a können über die Bedienfläche 28 Verstellbefehle eingegeben werden. Diese Verstellbefehle werden von dem Sender 22 als digitale IR-Signale an den Operationstisch 10a gesendet und von dessen Empfänger 18 empfangen. Eine Steuereinheit (nicht gezeigt) des Operationstisches 10a steuert geeignete Aktuatoren (nicht gezeigt) an, um den Operationstisch 10a entsprechend den Verstellbefehlen zu verstellen.

Beispielsweise hält der Benutzer eine Taste zum Verstellen der Höhe des Operationstisches 10a so lange gedrückt, bis dieser auf die erwünschte Höhe verfahren ist. Die Daten für das Verstellen der Höhe werden jedoch nicht kontinuierlich an den Operationstisch 10a übertragen, sondern in Form von Datenblöcken, die nacheinander gesendet werden, wobei zwischen dem Senden der einzelnen Datenblöcke jeweils eine Pause eingehalten wird.

Während der Verstellung werden von einer Steuerung (nicht gezeigt) des Operationstisches 10a Informationen über den gegenwärtigen Zustand oder Status des Operationstisches 10a erzeugt. Diese Informationen werden als digitale Statusanzeigen in den Pausen zwischen den Datenblöcken, die das Bediengerät 12a an den Operationstisch 10a sendet, als digitale IR-Signale an das Bediengerät 12a gesendet, und ihr Inhalt wird an dem LC-Display 26 angezeigt. Somit kann der Benutzer beispielsweise während der oben erwähnten Höhenverstellung des Operationstisches auf dem LC-Display 26 die aktuell erreichte Höhe ablesen und die Höhenverstellung je nach angezeigtem Wert anhalten oder mit ihr fortfahren. Durch diese quasi gleichzeitige, ineinander verschachtelte Übertragung von IR-Signalen zwischen dem Operationstisch 10a und dem Bediengerät 12a erhält der Benutzer während der Bedienung des Bediengerätes 12a die aktuellen Statusanzeigen und kann sich daran orientieren, d.h. er wird in der Bedienung geführt.

Im Betrieb des Operationstisches 10a werden eine Vielzahl von Zuständen des Operationstisches 10a auf dem Display 26 angezeigt, darunter die aktuelle Stellung und Position der Lagerfläche des Operationstisches 10a, Informationen darüber, ob eine gespeicherte Stellung oder Position der Lagerfläche bereits erreicht ist, Fehlermeldungen, wie beispielsweise, dass eine Verriegelung zwischen der Lagerfläche und einer Tischsäule nicht geschlossen ist, Informationen über Funktionen, die nicht möglich sind, Informationen bezüglich der Stromversorgung, oder bei einem mobilen Operationstisch, den Ladezustand von Akkumulatoren, und ein Warnsignal, falls die Gefahr besteht, dass der Operationstisch mit einem Zubehörteil zusammenstoßen könnte.

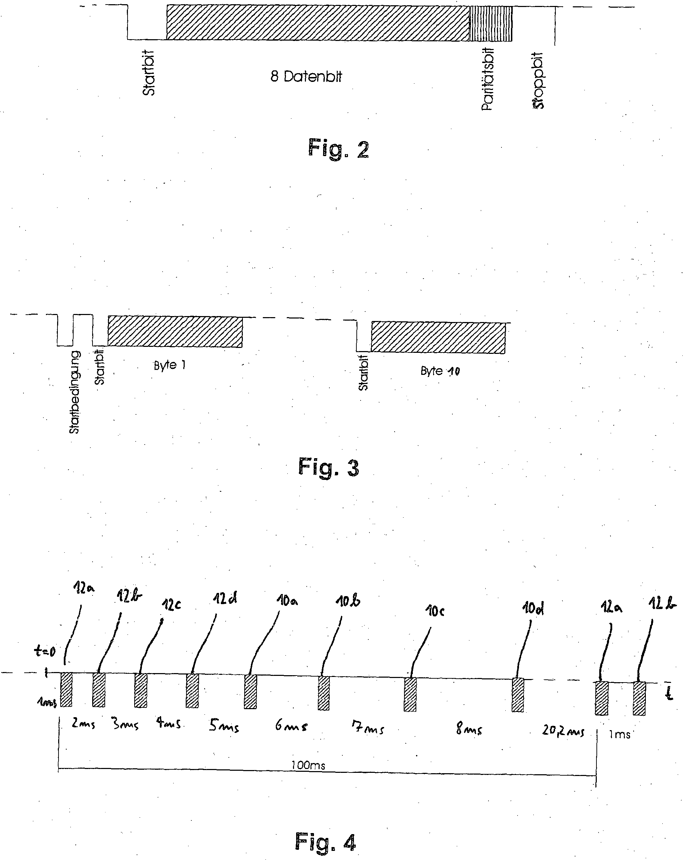

In dem gezeigten Ausführungsbeispiel beträgt die Trägerfrequenz der IR-Signale 455 KHz. Ein Bit ist dabei 50 µs lang. In Figur 2 ist der Aufbau eines Bytes in dem verwendeten Datenformat schematisch dargestellt. Wie in Figur 2 gezeigt ist, besteht ein Byte aus einem Startbit, gefolgt von 8 Datenbits. Darauf schließen ein Paritätsbit und ein Stoppbit an. Daraus ergibt sich eine Bytelänge von insgesamt 550 µs.

In Figur 3 ist der Aufbau eines Datenblocks schematisch dargestellt. Jeder Datenblock beginnt mit einer Startbedingung aus zwei Bits, nämlich 50 µs "0", und 50 µs "1". Dadurch wird der Anfang eines Datenblocks gekennzeichnet. Die folgenden beiden Bytes dienen der Identifikation des Senders der Daten. In diesen Identifikationsdaten ist u.a. der oben erwähnte IR-Code enthalten. Das dritte Byte enthält eine Prüfsumme und das vierte bis zehnte Byte enthalten die Nutzdaten. Die einzelnen Bytes eines Datenblocks werden lückenlos gesendet. Somit ergibt sich einschließlich der Startbedingung eine Dauer von 5,6 ms für einen Datenblock.

Bevor ein Teilnehmer einen Datenblock sendet, prüft er zunächst, ob gerade ein anderes IR-Signal vorliegt, sei es, weil ein anderer Sender gerade eine Nachricht sendet, oder dass ein Fremdgerät ein Störsignal sendet. Erst wenn dieses IR-Signal verschwunden ist, darf der Teilnehmer, nach einer zusätzlichen Wartezeit, seinen Datenblock senden.

Die Wartezeit ist im gezeigten Ausführungsbeispiel für jeden der acht Teilnehmer 10a bis 10d, 12a bis 12d unterschiedlich. Der Grund hierfür besteht darin, dass ansonsten zwei oder mehrere Teilnehmer, die zufälligerweise gleichzeitig darauf warten, dass eine gerade gesendete Nachricht zu Ende ist, gleichzeitig senden würden und ihre Signale sich gegenseitig stören würden. Im gezeigten Ausführungsbeispiel ist dieses Problem so gelöst, dass die Wartezeit für das Bediengerät 12a eine ms, für das Bediengerät 12b zwei ms, für das Bediengerät 12c drei ms und für das Bediengerät 12d vier ms beträgt. Die Wartezeit für den Operationstisch 10a beträgt fünf ms, für den Operationstisch 5b sechs ms, für den Operationstisch 10c sieben ms und für den Operationstisch 10d acht ms. Die Bediengeräte 12a bis 12d haben also sämtlich kürzere Wartezeiten und sind somit gegenüber den Operationstischen 10a bis 10d bevorzugt. Dahinter steckt der Gedanke, dass die Bediengeräte, die die aktiven Befehle ausgeben, eine höhere Priorität als die Operationstische haben, die im Wesentlichen Statusinformationen zurücksenden.

In dem Zeitdiagramm von Figur 4 bezeichnet die Zeit t=0 den Zeitpunkt, zu dem ein zuvor gesendetes IR-Signal beendet ist. Nach einer Wartezeit von einer ms sendet das Bediengerät 12a seinen Datenblock, was 5,6 ms dauert (die Länge der Datenblöcke sind in Figur 4 nicht maßstabsgenau eingezeichnet). Nach 2 ms, also während das Bediengerät 12a bereits seinen Datenblock sendet, ist die Wartezeit des Bediengerätes 12b von 2 ms verstrichen. Das Bediengerät 12b prüft, ob ein IR-Signal vorliegt, was der Fall ist, weil das Bediengerät 12a ja gerade seinen Datenblock überträgt. Dementsprechend wartet das Bediengerät 12b bis die Übertragung des Datenblocks des Bediengerätes 12a beendet ist und weitere 2 ms, bis es mit der Übertragung seines Datenblocks beginnt. Drei ms nachdem das Bediengerät 12b seinen Datenblock fertig gesendet hat, beginnt das Bediengerät 12c mit der Übertragung seines Datenblocks u.s.w. Durch die unterschiedlichen Wartezeiten synchronisieren sich die acht Teilnehmer 10a bis 10d, 12a bis 12d selbst untereinander, so dass alle nacheinander ihren Datenblock senden können.

Nach 80,8 ms, die sich aus acht Datenblocklängen von 5,6 ms plus der Summe der Wartezeiten ergeben, hat auch der letzte Teilnehmer, der Operationstisch 10d, seinen Datenblock gesendet. Im gezeigten Ausführungsbeispiel sendet jeder Teilnehmer zyklisch alle 100 ms einen Datenblock. 20,2 ms nachdem der Operationstisch 10d seinen Datenblock gesendet hat, bzw. 101 ms nach dem Zeitpunkt t=0 von Figur 1 sendet daher das Bediengerät 12a wiederum einen weiteren Datenblock, und die Abfolge wiederholt sich.

Auf diese Weise können acht Teilnehmer quasi gleichzeitig, nämlich ineinander verschachtelt, ihre Daten übertragen.

Alternativ hierzu wäre es möglich, dass die Teilnehmer 10a bis 10d, 12a bis 12d ihre Wartezeiten nach einem Zufallsprinzip auswähler, beispielsweise die Bediengeräte 12a bis 12d aus Wartezeiten von 1, 2, 3 oder 4 ms und die Operationstische 10a bis 10d aus Wartezeiten von 5, 6, 7 oder 8 ms zufällig auswählen. Da nicht alle Teilnehmer 10a bis 10d, 12a bis 12d gleichzeitig senden wollen, würden sich nur selten Kollisionen ergeben, die dann auf unten näher erläuterte Weise korrigiert würden. Durch die zufällige Zuordnung der Wartezeiten müssen die unterschiedlichen Operationstische 10a bis 10d und ihre zugehörigen Bediengeräte 12a bis 12d bezüglich der Wartezeiten nicht aufeinander abgestimmt werden.

Ein jeder der Teilnehmer 10a bis 10d, 12a bis 12d empfängt mit seinem Empfänger 16 bzw. 24 sein eigenes Signal und prüft dieses. Für den Fall, dass er feststellt, dass das Signal beispielsweise durch Kollision mit einem anderen Signal gestört wurde, sendet er den zugehörigen Datenblock beim nächsten Mal erneut. Dadurch wird sichergestellt, dass trotz gelegentlicher Störungen keine Daten verloren gehen.

Obgleich in den Zeichnungen und in der vorhergehenden Beschreibung ein bevorzugtes Ausführungsbeispiel aufgezeigt und detailliert beschrieben ist, sollte dies als rein beispielhaft und die Erfindung nicht einschränkend eingesehen werden. Es wird darauf hingewiesen, dass nun das bevorzugte Ausführungsbeispiel dargestellt und beschrieben ist und sämtliche Veränderungen und Modifizierungen, die derzeit und künftig im Schutzumfang der Erfindung liegen, geschützt werden sollen.

## Patentansprüche

1. Verfahren zur bidirektionalen IR-Datenübertragung zwischen einem medizinischen Behandlungstisch, insbesondere Operationstisch (10a bis 10d), und einem Bediengerät (12a bis 12d), die Teilnehmer der IR-Datenübertragung sind und jeweils einen IR-Sender (16, 22) und einen IR-Empfänger (18, 24) umfassen, **dadurch gekennzeichnet, dass** die von einem Teilnehmer (10a bis 10d, 12a bis 12d) zu übertragenden Daten in Datenblöcke aufgeteilt werden, die nacheinander gesendet werden, wobei zwischen dem Senden der einzelnen Datenblöcke jeweils eine Pause eingehalten wird, und bei dem innerhalb der Pausen Daten von einem anderen Teilnehmer (10a bis 10d, 12a bis 12d) gesendet werden, und dass die Teilnehmer (10a bis 10d, 12a bis 12d) ihr gesendetes IR-Signal selbst empfangen, dieses prüft und für den Fall, dass das Signal gestört wurde, die zugehörigen Daten erneut sendet.

2. Verfahren nach Anspruch 1, bei dem vor dem Senden eines Datenblocks geprüft wird, ob gegenwärtig IR-Signale vorliegen, und bei dem für den Fall, dass IR-Signale vorliegen, mit dem Senden des Datenblocks gewartet wird, bis eine vorbestimmte Wartezeit seit dem Verschwinden des IR-Signals verstrichen ist.

3. Verfahren nach Anspruch 2, bei dem die vorbestimmte Wartezeit des Bediengerätes 12a bis 12d von der vorbestimmten Wartezeit des Operationstisches (10a bis 10d) verschieden, insbesondere kürzer ist.

4. Verfahren nach Anspruch 2 oder 3, bei dem mehrere Operationstische (10a bis 10d) und zugehörige Bediengeräte (12a bis 12d) mit zumindest teilweise überlappenden IR-Signal-Empfangsbereichen vorgesehen sind, und einem jeden der Teilnehmer eine andere Wartezeit zugeordnet wird.

5. Verfahren nach Anspruch 2 oder 3, bei dem unterschiedliche Wartezeiten vorgesehen sind und die betreffende Wartezeit zufällig ausgewählt wird.

6. Verfahren nach einem der vorhergehenden Ansprüche, bei dem die Trägerfrequenz der IR-Signale mehr als 120 KHz, vorzugsweise 350 KHz bis 550 KHz beträgt.

7. Verfahren nach einem der vorhergehenden Ansprüche, bei dem jeder Datenblock einen Identifikationscode enthält, der einem Teilnehmer (10a bis 10d, 12a bis 12d) zugeordnet ist, und bei dem ein jeder Teilnehmer (10a bis 10d, 12a bis 12d) anhand des Identifikationscodes erkennt, ob der Datenblock für ihn bestimmt ist.

8. Verfahren nach einem der vorhergehenden Ansprüche, bei dem die Signallänge eines Datenblocks eine ms bis 50 ms, vorzugsweise 2 ms bis 10 ms beträgt.

9. Verfahren nach einem der vorhergehenden Ansprüche, bei dem die Pause zwischen dem Senden zweier Datenblöcke durch denselben Teilnehmer (10a bis 10d, 12a bis 12d) das 5- bis 50-fache, vorzugsweise das 10- bis 25-fache der Signallänge eines Datenblocks beträgt.

10. Verfahren nach einem der vorhergehenden Ansprüche, bei dem die von dem Bediengerät (12a bis 12d) auf den Operationstisch (10a bis 10d) zu übertragenden Daten Verstellbefehle zum Verstellen der Lagerfläche des Operationstisches betreffen.

11. Verfahren nach einem der vorhergehenden Ansprüche, bei dem die vom Operationstisch (10a bis 10d) auf das Bediengerät (12a bis 12d) zu übertragenden Daten einen oder mehrere der folgenden Zustände des Operationstisches betreffen: die aktuelle Stellung und Position der Lagerfläche, das Erreichen von gespeicherten Stellungen und Positionen der Lagerfläche, Fehlermeldungen, Informationen über nicht mögliche Funktionen, die Verbindung zum Stromnetz, den Ladezustand von Akkumulatoren, und eine Warnung vor einer Kollision des Operationstisches (10a bis 10d) mit Zubehör.

12. Verfahren nach einem der vorhergehenden Ansprüche, bei dem das Bediengerät durch eine tragbare, in der Hand zu haltende Fernbedienung (12a bis 12d), durch einen Fußschalter oder durch eine an einer Wand zu befestigende Fernbedienung gebildet wird.

13. Verfahren nach Anspruch 12, bei dem das Bediengerät (12a bis 12d) ein Display (26) hat.

14. Einrichtung zur bidirektionalen IR-Datenübertragung zwischen einem medizinischen Behandlungstisch, insbesondere einem Operationstisch (10a bis 10d), und einem Bediengerät (12a bis 12d), mit einer ersten IR-Datenübertragungseinheit (14), die im Behandlungstisch (10a bis 10d) angeordnet ist und einen IR-Sender (16) und einen IR-Empfänger (18) umfasst, und mit einer zweiten IR-Datenübertragungseinheit (20), die im Bediengerät (12a bis 12d) angeordnet ist und einen IR-Sender (22) und einen IR-Empfänger (24) umfasst,
bei der die erste und/oder die zweite IR-Datenübertragungseinheit (14, 20) so programmiert ist, dass sie zu übertragende Daten in Datenblöcke aufteilt und nacheinander an die zweite bzw. erste Datenübertragungseinheit (20, 14) sendet,
wobei sie zwischen dem Senden der einzelnen Datenblöcke jeweils eine Pause einhält und wobei die zweite bzw. erste Datenübertragungseinheit (20, 14) programmiert ist, um innerhalb der Pausen Daten an die erste bzw. zweite Datenübertragungseinheit (14, 20) zu senden, und
wobei sie ihr gesendetes IR-Signal selbst empfängt, dieses prüft, und für den Fall, dass das Signal gestört wurde, die zugehörigen Daten erneut sendet.

15. Einrichtung nach Anspruch 14, bei der die Datenübertragungseinheit (14, 20) so programmiert ist, dass sie prüft, ob gegenwärtig IR-Signale vorliegen, und für den Fall, dass IR-Signale vorliegen, mit dem Senden des Datenblocks wartet, bis eine vorbestimmte Wartezeit seit dem Verschwinden des IR-Signals verstrichen ist.

16. Einrichtung nach Anspruch 15, bei der die vorbestimmte Wartezeit des Bediengerätes (12a bis 12d) von der vorbestimmten Wartezeit des Operationstisches (10 bis 10d) verschieden, insbesondere kürzer ist.

17. Einrichtung nach einem der Ansprüche 14 bis 16, die zum Ausführen eines Verfahrens nach einem der Ansprüche 1 bis 13 geeignet ist.

## Claims

1. Method for bidirectional IR data transfer between a medical treatment table, in particular an operating table (10a to 10d), and an operating device (12a to 12d) which are subscribers to the IR data transfer and each comprise an IR transmitter (16, 22) and an IR receiver (18, 24), **characterised in that** the data to be transferred by a subscriber (10a to 10d, 12a to 12d) are split into data blocks which are transmitted in succession, wherein a respective pause is observed between the transmission of the individual data blocks, and wherein data from another subscriber (10a to 10d, 12a to 12d) are transmitted within the pauses, and **in that** the subscribers (10a to 10d, 12a to 12d) receive their transmitted IR signal themselves, examine this and in the event that the signal has been disturbed re-transmit the associated data.

2. Method as claimed in claim 1, wherein the transmission of a data block is preceded by a check to determine whether IR signals are currently present, and wherein in the event that IR signals are present, then the transmission of the data block is held until a predetermined waiting time has elapsed since the disappearance of the IR signal.

3. Method as claimed in claim 2, wherein the predetermined waiting time for the operating device 12a to 12d is different from, in particular shorter than, the predetermined waiting time for the operating table (10a to 10d).

4. Method as claimed in claim 2 or 3, wherein a plurality of operating tables (10a to 10d) and associated operating devices (12a to 12d) having at least partly overlapping IR signal reception ranges are provided, and each of the subscribers is allocated a different waiting time.

5. Method as claimed in claim 2 or 3, wherein different waiting times are provided and the relevant waiting time is selected at random.

6. Method as claimed in any one of the preceding claims, wherein the carrier frequency for the IR signals is more than 120 kHz, preferably 350 kHz to 550 kHz.

7. Method as claimed in any one of the preceding claims, wherein each data block contains an identification code which is associated with a subscriber (10a to 10d, 12a to 12d), and wherein each subscriber (10a to 10d, 12a to 12d) identifies from the identification code whether the data block is intended therefor.

8. Method as claimed in any one of the preceding claims, wherein the signal length of a data block is from one ms to 50 ms, preferably 2 ms to 10 ms.

9. Method as claimed in any one of the preceding claims, wherein the pause between the transmission of two data blocks by the same subscriber (10a to 10d, 12a to 12d) is 5 to 50 times, preferably 10 to 25 times, the signal length of a data block.

10. Method as claimed in any one of the preceding claims, wherein the data to be transferred from the operating device (12a to 12d) to the operating table (10a to 10d) relate to adjustment commands for adjusting the bearing surface of the operating table.

11. Method as claimed in any one of the preceding claims, wherein the data to be transferred from the operating table (10a to 10d) to the operating device (12a to 12d) relate to one or more of the following states of the operating table: the current attitude and position of the bearing surface, the attainment of stored attitudes and positions of the bearing surface, error messages, information relating to functions which are not possible, the connection to the power supply, the charge state of storage batteries, and a warning regarding a collision between the operating table (10a to 10d) and accessories.

12. Method as claimed in any one of the preceding claims, wherein the operating device is formed by a portable, hand-held remote control (12a to 12d), by a footswitch or by a remote control which is to be mounted on a wall.

13. Method as claimed in claim 12, wherein the operating device (12a to 12d) has a display (26).

14. Device for bidirectional IR data transfer between a medical treatment table, in particular an operating table (10a to 10d), and an operating device (12a to 12d), having a first IR data transfer unit (14) which is arranged in the treatment table (10a to 10d) and comprises an IR transmitter (16) and an IR receiver (18), and having a second IR data transfer unit (20) which is arranged in the operating device (12a to 12d) and comprises an IR transmitter (22) and an IR receiver (24),
wherein the first and/or the second IR data transfer unit (14, 20) is programmed such that it splits data, to be transferred, into data blocks and transmits same in succession to the second or first data transfer unit (20, 14),
wherein it observes a respective pause between the transmission of the individual data blocks and wherein the second or first data transfer unit (20, 14) is programmed to transmit data to the first or second data transfer unit (14, 20) within the pauses, and
wherein it receives its transmitted IR signal itself, examines this and in the event that the signal has been disturbed re-transmits the associated data.

15. Device as claimed in claim 14, wherein the data transfer unit (14, 20) is programmed such that it checks whether IR signals are currently present, and in the event that IR signals are present, it holds transmission of the data block until a predetermined waiting time has elapsed since the disappearance of the IR signal.

16. Device as claimed in claim 15, wherein the predetermined waiting time for the operating device (12a to 12d) is different from, in particular shorter than, the predetermined waiting time for the operating table (10a to 10d).

17. Device as claimed in any one of claims 14 to 16, which is suitable for carrying out a method as claimed in any one of claims 1 to 13.

## Revendications

1. Procédé de transmission bidirectionnelle de données par infrarouge entre une table médicale de traitement, en particulier une table d'opération (10a à 10d) et un appareil de commande (12a à 12d), qui participent à la transmission des données par infrarouge et comprennent chacun un émetteur infrarouge (16, 22) et un récepteur infrarouge (18, 24), **caractérisé en ce que** les données destinées à être transmises par un participant (10a à 10d, 12a à 12d) sont divisées en blocs de données, qui sont envoyés les uns après les autres, une pause étant à chaque fois observée entre l'émission des blocs de données individuels, et selon ledit procédé, pendant les pauses, des données sont envoyées par un autre participant (10a à 10d, 12a à 12d), et **en ce que** les participants (10a à 10d, 12a à 12d) reçoivent eux-mêmes leur signal infrarouge émis, ledit signal étant contrôlé, et au cas où le signal serait perturbé, les données associées sont à nouveau émises.

2. Procédé selon la revendication 1, selon lequel avant l'émission d'un bloc de données, on vérifie si des signaux infrarouge sont actuellement présents, et selon lequel, au cas où des signaux infrarouge seraient présents, on attend avec l'émission du bloc de données jusqu'à ce qu'un temps d'attente prédéfini depuis la perte du signal infrarouge se soit écoulé.

3. Procédé selon la revendication 2, selon lequel le temps d'attente prédéfini de l'appareil de commande (12a à 12d) est différent du temps d'attente prédéfini de la table d'opération (10a à 10d), en particulier plus court.

4. Procédé selon la revendication 2 ou 3, selon lequel plusieurs tables d'opération (10a à 10d) et des appareils de commande (12a à 12d) associés sont pourvus de zones de réception de signaux infrarouge se chevauchant au moins en partie, et un autre temps d'attente est associé à chacun des participants.

5. Procédé selon la revendication 2 ou 3, selon lequel différents temps d'attente sont prévus et le temps d'attente concerné est sélectionné de manière aléatoire.

6. Procédé selon l'une quelconque des revendications précédentes, selon lequel la fréquence porteuse des signaux infrarouge est supérieure à 120 KHz, de préférence dans une plage de 350 KHz à 550 KHz.

7. Procédé selon l'une quelconque des revendications précédentes, selon lequel chaque bloc de données contient un code d'identification qui est associé à un participant (10 à 10d, 12a à 12d), et selon lequel chaque participant (10 à 10d, 12a à 12d) détecte à l'aide du code d'identification si le bloc de données lui est destiné.

8. Procédé selon l'une quelconque des revendications précédentes, selon lequel la longueur de signal d'un bloc de données atteint 1 ms à 50 ms, de préférence se situe dans la plage de 2 ms à 10 ms.

9. Procédé selon l'une quelconque des revendications précédentes, selon lequel la pause entre l'envoi de deux blocs de données par le même participant (10 à 10d, 12a à 12d) atteint 5 à 50 fois, de préférence 10 à 25 fois la longueur de signal d'un bloc de données.

10. Procédé selon l'une quelconque des revendications précédentes, selon lequel les données destinées à être transmises de l'appareil de commande (12a à 12d) à la table d'opération (10a à 10d) concernent des instructions de déplacement du déplacement de la surface d'appui de la table d'opération.

11. Procédé selon l'une quelconque des revendications précédentes, selon lequel les données destinées à être transmises de la table d'opération (10a à 10d) à l'appareil de commande (12a à 12d) concernent un ou plusieurs des états suivants de la table d'opération : la position et la posture actuelles de la surface d'appui, l'obtention de positions et de postures mises en mémoire de la surface d'appui, les messages d'erreur, les informations concernant des fonctions non possibles, le raccordement au réseau électrique, l'état de charge d'accumulateurs, et un avertissement d'une collision entre la table d'opération (10a à 10d) et des accessoires.

12. Procédé selon l'une quelconque des revendications précédentes, selon lequel l'appareil de commande est formé par une télécommande (12a à 12d) portative, destinée à être tenue dans la main, par un commutateur à commande au pied ou par une télécommande destinée à être fixée sur un mur.

13. Procédé selon la revendication 12, selon lequel l'appareil de commande (12a à 12d) présente un écran (26).

14. Dispositif de transmission bidirectionnelle de données par infrarouge entre une table médicale de traitement, en particulier une table d'opération (10a à 10d) et un appareil de commande (12a à 12d), comprenant une première unité de transmission de données par infrarouge (14), qui est disposée dans la table de traitement (10a à 10d) et comprend un émetteur infrarouge (16) et un récepteur infrarouge (18), et comprenant une deuxième unité de transmission de données par infrarouge (20), qui est disposée dans l'appareil de commande (12a à 12d) et comprend un émetteur infrarouge (22) et un récepteur infrarouge (24),
avec lequel la première et/ou la deuxième unité de transmission de données par infrarouge (14, 20) sont programmées de telle manière qu'elles divisent des données à transmettre en blocs de données et les envoient les uns après les autres à la deuxième ou à la première unité de transmission de données par infrarouge (20, 14),
la première et/ou la deuxième unité de transmission de données par infrarouge observant à chaque fois une pause entre l'envoi des blocs de données individuels et la deuxième ou la première unité de transmission de données par infrarouge (20, 14) étant programmée pour envoyer, pendant la pause, des données à la première ou à la deuxième unité de transmission de données par infrarouge (14, 20), et
la première et/ou la deuxième unité de transmission de données par infrarouge recevant elles-mêmes leur signal infrarouge envoyé, le contrôlant, et au cas où le signal aurait été perturbé, les données associées sont à nouveau envoyées.

15. Dispositif selon la revendication 14, avec lequel l'unité de transmission de données (14, 20) est programmée de telle manière qu'elle contrôle si des signaux infrarouge sont actuellement présents, et au cas où des signaux infrarouge seraient présents, attend avec l'envoi du bloc de données, jusqu'à ce qu'un temps d'attente prédéfini depuis la perte du signal infrarouge se soit écoulé.

16. Dispositif selon la revendication 15, avec lequel le temps d'attente prédéfini de l'appareil de commande (12a à 12d) est différent du temps d'attente prédéfini de la table d'opération (10 à 10d), en particulier plus court.

17. Dispositif selon l'une quelconque des revendications 14 à 16, qui est adapté à la mise en oeuvre d'un procédé selon l'une quelconque des revendications 1 à 13.
